# EUROPEAN PATENT APPLICATION

(11) **EP 1 936 858 A1**
(43) Date of publication of application: **25.06.2008**
(21) Application number: 06126369.5
(22) Date of filing: 18.12.2006
(51) Int. Cl.: H04L 7/04

(54) **Synch pattern detection in a digital data transmission system**

(71) Applicant: Deutsche Thomson OHG, 30625 Hannover (DE)
(72) Inventor: Hölzemann, Herbert, 78048, Villingen (DE); Schmitt, Dirk, 78176, Blumberg (DE); Müller, Stefan, 78048, VS-Villingen (DE)
(74) Representative: Kurth, Dieter

(57) **Abstract**

Synch pattern detection in a digital data transmission system is performed by using a soft decision synch pattern detector, which provides a matched signal even if not all bits of the synch pattern or corresponding bit likelihood values are correctly detected. A-posteriori probability values of channel data or log-likelihood ratio values are used for detecting the synch pattern by generating a synch pattern likelihood value for a data sequence, which shall be checked whether or not it correlates with the synch pattern and said synch pattern likelihood value is compared with an adaptive threshold. The synch pattern likelihood value is formed by a combination of a-posteriori probability values of channel data or log-likelihood ratio values with a conditional information for each bit of the expected synch pattern, which is e.g. a sign value determined according to the bit value of the corresponding bit of the synch pattern and said combination comprises a multiplication of likelihood and sign values and a summation of the products formed for each likelihood value. The adaptive threshold is formed by stepwise reducing a maximum value of the adaptive threshold until an expected number of synch patterns during a predetermined period of time is detected or synch pattern in an expected distance are detected. The soft decision synch pattern detector is applicable in digital data transmission systems having a data channel with intrinsic information about symbol reliability.

## Description

### FIELD OF THE INVENTION

The present invention relates to a method and an arrangement for synch pattern detection in a digital data transmission system having a data channel with intrinsic information about symbol reliability and more particularly to a method and an arrangement for detecting synchronisation marks in a data stream of such a data channel as e.g. read from a magnetic or optical storage medium or provided in a communication system.

### BACKGROUND OF THE INVENTION

Synch pattern detection is an essential part of the decoding process in a digital data transmission system as e.g. in optical or magnetic storage systems or communication systems. Special care must be taken to ensure a proper detection of all inserted synchronisation marks because they are needed for timing recovery, demodulation and error correction. A non- or wrong detected synchronisation mark will cause several processing failures in the following decoding steps of transmitted data which then lead to non readable data. Conventional synch pattern detection is based on hard decisions using a matched filter. Furthermore, it is also known to use a sum of absolute values of logarithm likelihood ratio of the posteriori probability of each bit which is output as a decoding result in a communication system to perform synchronous control as disclosed in US 2004/0185886A1. However, it is a problem that a low-density parity check decoder has to be started at each possible start point in the data stream and to measure the variable node reliability, which means that a very high number of iterations and a very high frequency are necessary, which seems to be almost impossible from the technical point of view in consumer products.

### SUMMARY OF THE INVENTION

It is an aspect of the present invention to provide a method and an arrangement for synch pattern detection in a digital data transmission system having a data channel with intrinsic information about symbol reliability which ensure with low outlay a synchronisation pattern detection even if not all bits of the synchronisation pattern are correctly detected as e.g. under low signal noise ratio conditions.

This object is achieved by means of features specified in independent claims. Advantageous embodiments are specified in dependent claims.

It is an aspect of the invention to provide synchronisation pattern detection even if not all bits of the synchronisation pattern are correctly detected for which a hard decision system fails to provide the information about the occurrence of a synchronisation pattern. The term synchronisation pattern will be called synch pattern in the following and shall be understood as code sequence, which is expected to be contained within digital samples of a data stream received in a digital data transmission system. It is well known that a matched filter provides a score value indicating a correlation between a received code sequence and a synch pattern or code sequence, which shall be detected, and that soft decision systems provide information about the reliability of a bit value. However, said knowledge is not sufficient to be able to decide whether or not a bit pattern in a data stream of a digital data transmission system can be interpreted as a sync pattern or not because a data sequence in which one or two bit values are different to the synch pattern are very likely in a digital data transmission system having a low signal noise ratio, which requires a correlation of all bits. Furthermore, a summation of reliability values of single bits leads only to an interference reliability or variable node reliability, which is directly proportional to the signal noise ratio.

Nevertheless, soft decision output values are used for synch pattern detection according to the invention, which is based on the principle that a conditional information, which is inherent in the bits of an expected synch pattern, is combined with likelihood values or so-called soft values of single bits in a data sequence of a received data stream and a synch pattern likelihood value for a received bit pattern is formed, which compared with an adaptive threshold provides the information whether or not the investigated bit pattern is a synch pattern and that even if not all bits of the synch pattern are correctly detected. The adaptive threshold depends on the signal noise ratio, the length and the structure of the code sequence, which is expected to be contained within the channel data of the data stream, and is determined by an observation of the occurrence of synch pattern dependent on a stepwise reduced value of the adaptive threshold. As the distance in which synch pattern occur in the data stream is known, it is possible to reduce the value of the adaptive threshold until expected synch pattern are detected.

It is a further aspect of the invention to provide synch pattern detection, which takes into account the influence of a data channel on the transmission of the sync pattern.

That means that the synch pattern detection takes into account changes of the likelihood values of bits of a received synch pattern caused by the transmission channel and the structure of the synch pattern. As e.g. the reliability of a correct transmission of a second one of three equal bit values will be higher in a system with high jitter, a synch pattern detection taking into account such changes of the likelihood values improves the reliability of the synch pattern detection in case of a very low signal noise ratio and even if not all bits of the synchronisation pattern are correctly detected.

The method for synch pattern detection in a digital data transmission system comprises the use of intrinsic information about symbol reliability in channel data of a data stream and comparing a generated synch pattern likelihood value of a bit pattern with an adaptive threshold for providing a synch pattern matched signal even if not all bits of the synch pattern are correctly detected. Said synch pattern likelihood value is generated by a combination of the conditional information for each bit of an expected synch pattern with the likelihood value for each bit of a bit pattern, which for an investigation is present in a soft decision synch pattern detector, wherein the number of taps at least corresponds to a number of bits of the synch pattern, which shall be detected. The conditional information for a bit of an expected synch pattern comprises e.g. a sign and a value corresponding to the value of the bits of the expected synch pattern. That means that e.g. for an expected synch pattern formed by bit values 1, 0, 1, 0, 1 the corresponding conditional information +1, -1, +1, -1, +1 can be used. In this example, the conditional information is determined by a sign and a weighting factor one, which form an evaluation vector, wherein the sign is derived by a parity-check-equation of the bits of the synch pattern, which shall be detected. As elements of a parity-check-equation are jointed as a logic XOR-combination of the bits of a synch pattern, which shall be detected, the conditional information for each bit of the synch pattern may be expressed as a sign value. However, it is also possible to express the sign value by value ranges indicating that the corresponding bit of the synch pattern has the bit value 1 or 0 and also a specific weight factor for each bit of the synch pattern can be selected, which represents an expected influence on the likelihood values for transmitted bits of the synch pattern by the transmission channel.

The conditional information or an evaluation vector for a bit of an expected synch pattern is then multiplied with the likelihood value for a bit of a bit pattern, which shall be checked whether it is a synch pattern. The sum of the products according to the length of the synch pattern represents then a synch pattern likelihood value, which in comparison with an adaptive threshold value determines whether or not a synch pattern occurred in the data stream even if not all bits of the synchronisation pattern are correctly detected or have been correctly received. Said adaptive threshold is determined by an approximation procedure according to a detection of synch patterns in the data stream. The approximation procedure is performed by stepwise reducing a maximum value of the adaptive threshold until a number of synch patterns, which in a certain time is expected in the data stream, occur or occur in a distance to each other as expected.

A corresponding device comprises respective means for executing each of the method steps. That means that a soft decision synch pattern detector according to the invention comprises a number of multiplier corresponding to a number of bits of a synch pattern, which shall be detected. Each multiplier is supplied by a likelihood value, which represents the likelihood of a present bit in a tap of the soft decision synch pattern detector, and corresponding conditional information as e.g. a sign value of the synch pattern, which shall be detected. The soft decision synch pattern detector comprises furthermore an adder connected to a first input of a comparator, wherein the adder forms a summation signal from the outputs of the multiplier and the comparator provides a matched signal dependent on a comparison of the summation signal, which represents a synch pattern likelihood value of a current bit pattern, with an adaptive threshold applied to a second input of said comparator. The adaptive threshold is provided by an approximation unit, which checks the occurrence of synch patterns dependent on a stepwise reduced value of the adaptive threshold and determines a corresponding threshold. Said approximation unit comprises according to an embodiment of the invention a state machine, which performs the operation as mentioned above.

That means that the additional hardware complexity for improved synch pattern detection according to the invention is only minimal because soft decision values are already available in current channel decoding architectures.

An advantage of the present invention is the improved synch pattern detection especially under low signal noise ratio conditions and even if not all bits of the synch pattern are correctly detected. That means that the synch pattern detection according to the invention gives a more reliable indication about the presence of a synch pattern in a bit stream representing a signal with low signal noise ratio in a digital data transmission system because the bits are weighted according to their reliability and probability in a sync pattern.

The specific nature of the invention as well as other objects, advantages, features and uses of the invention will become evident from the following description of an exemplarily embodiment taken in conjunction with the accompanying drawings.

### BRIEF DESCRIPTION OF EMBODIMENTS

Exemplary embodiments of the invention are described with reference to the accompanying drawings, which show in
Fig. 1 a circuit block diagram showing a schematic configuration of a reproducing system for implementing the present invention;
Fig. 2 an illustration of the basic operation of a known matched filter used as conventional synch pattern detector in a not matched and a matched state;
Fig. 3 a diagram illustrating structure and method of a soft decision synch pattern detector according to the invention;
Fig. 4 a table of bit values, likelihood values and synch pattern likelihood values in a scenario of a matched sync pattern;
Fig. 5 a table of bit values, likelihood values and synch pattern likelihood values in a scenario of a matched sync pattern even if not all bits are correctly detected;
Fig. 6 a signal diagram representing the synch pattern likelihood of the scenario according to Fig. 5;
Fig. 7 a signal diagram representing the magnitude of synch pattern correlations at a 10 dB signal noise ratio;
Fig. 8 a signal diagram representing the magnitude of synch pattern correlations at a 0 dB signal noise ratio and
Fig. 9 a flow chart diagram illustrating the operation of a state machine for providing an adaptive threshold.

### DETAILED DESCRIPTION OF EMBODIMENTS

The use of the same reference symbol in different drawings indicates similar items.

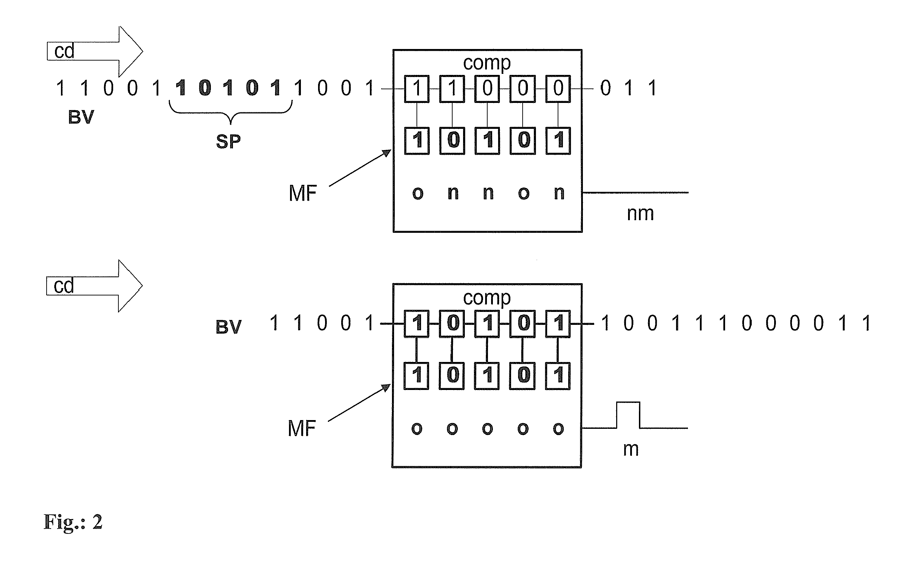

The basic operation of a known matched filter MF used as conventional synch pattern detector is illustrated in Fig. 2 for a scenario where a bit pattern does not match nm a synch pattern SP in the upper part of said Fig. 2 and where a synch pattern SP is matched m in the bottom part of Fig. 2. The operation of a matched filter MF is the same as correlating a signal with a copy of itself. Such filters are broadly used in signal processors of digital data transmission system to calculate the correlation between the transmitted signal and the received signal. The matched filter MF is designed to match a code sequence as e.g. a synch pattern SP, which is expected to be contained within the digital samples of a data stream received in a digital data transmission system. A code sequence of a synch pattern SP as e.g. 10101 is illustrated in bold in Fig. 2.

The small number of bits only for simplification and illustration purposes has been selected to demonstrate the principles. Bits of channel data cd have bit values BV as 0 or 1, which are shifted through the matched filter MF and the code sequence of interest is tested at each bit position along the data pattern. That means that a match is identified once all the bits of the code sequence are received and are in agreement with the structure of the synch patter. A conventional matched filter MF comprises so called taps and comparators comp, which compare each bit of a bit pattern present in the matched filter MF with a bit of the synch pattern SP, which shall be detected, in a data stream of channel data cd applied to the matched filter MF.

Each of the comparators comp provides an coincidence signal o if the bit value at a tap corresponds to the bit value of the bit of the synch pattern SP and provides an no coincidence signal n if the bit value at a tap does not fit. A not shown logic circuit combines the results of said comparisons and provides a match signal m if all bit values of an investigated data sequence agree with the bit values of the sync pattern and provides a not matched signal nm if one bit value is different. Therefore, conventional hard decision based synch pattern detection will fail, if not all bits of a synch pattern SP in a data stream are correctly detected as it especially occurs in case of low signal noise ratio conditions.

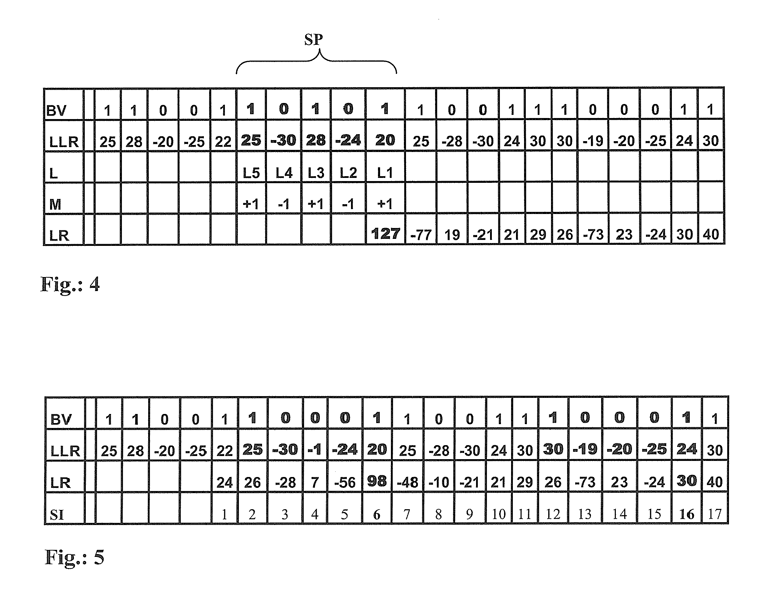

However, also an easy summation of reliability values of single bits provides no support for a detection of a sync pattern if one of the bit values BV has been wrong detected as it becomes clear from log-likelihood ratio values LLR shown in bold in Fig. 5. A first sum of bold numbers 25, - 30, -1, -24, 20 of log-likelihood ratio values LLR as well as the second sum of bold numbers 30, -19, -20, -25, 25 of log-likelihood ratio values LLR both provide a sum -10 and are related to bit patterns both having bit values BV 10001, however, only one of said bit pattern is a synch pattern SP for which one of the bit values BV has been wrong detected as will be shown below.

Although a summation of reliability values of single bits provides not the desired support for a detection of a sync pattern, soft decision output values are used for synch pattern detection according to the invention.

Hard decision means that a detector firmly selects one of two levels of a received signal and soft decision means that a detector provides a multipart decision for a binary signal as e.g. whether the amplitude of a received signal is greater or less than some reference levels. Therefore, soft decisions provide e.g. additional information about the signal noise ratio of a corrupted waveform or the likelihood whether a bit value is 1 or 0 in a digital data transmission system. For example, a technology, called partial response maximum likelihood abbreviated PRML, converts a weak analog signal read from a recording medium like an optical or magnetic disk into a digital signal and interprets even small changes in the analog signal, which allows the use of recording media with higher recording density. The partial response maximum likelihood method employs sophisticated digital signal sampling, processing and detection algorithms to manipulate the analog data stream read from the disk and determines the most likely sequence of bits included in the digital data transmission system. PRML decoder already became standard for data decoding due to the improved performance and a partial response maximum likelihood system for digital magnetic recording e.g. has been disclosed by Roy D Cideciyan et al. in IEEE JOURNAL ON SELECTED AREAS IN COMMUNICATIONS. VOL. 10, No. 1, January 1992, page 38 ff and an Implementation of PRML in a Rigid Disk drive has been disclosed by Coker et al. in IEEE TRANSACTIONS ON MAGNETICS, VOL. 27, No. 6, November 1991 page 4538 ff. A conventional PRML detector computes the most likely path sequence in a finite-state Markov chain. Markov chain means that the conditional probability distribution of the state in the future, given the state of the process currently and in the past, depends only on its current state and not on its state in the past. Synch pattern SP are embedded in the output stream of the PRML detector, which have to be detected and then conveyed to following processing blocks like timing recovery, demodulation and error correction. In case of conventional synch pattern detection, the synch pattern detector realised by a matched filter MF performs a bit pattern comparison to find the location of the synch pattern SP in the bit stream. This comparison works perfectly as long as all bits are properly detected, i.e. a one to one match, but in case of one or more wrong detected bits in the bit stream, the conventional approach will fail, i.e. the synch pattern SP cannot be recognized as explained in detail above and illustrated in Fig. 2.

Therefore, according to the invention it is recommended to use the reliability or likelihood information included in soft decision output values also for a synch pattern detection in a digital data transmission system, although reliability or likelihood values of single bits and also a summation of reliability values of single bits provide not the desired information about the occurrence of a sync pattern in the data stream if not all bits correct have been detected.

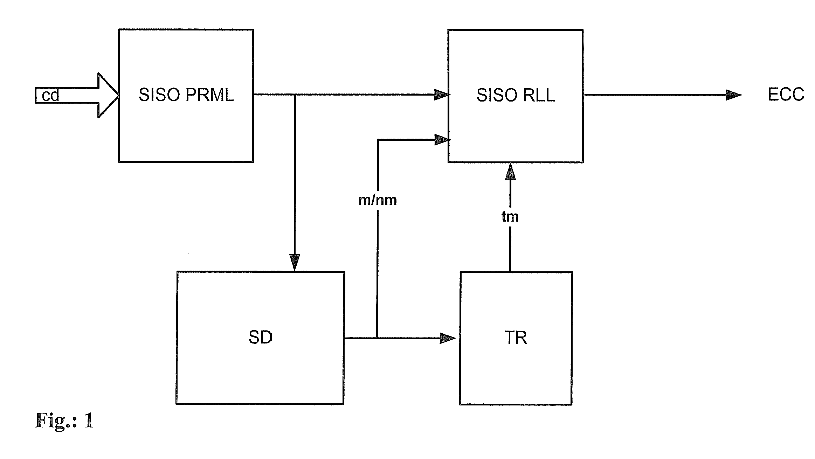

Soft decision values as for example log likelihood ratio values LLR give estimation about the reliability of decoded bits. The reliability information is used in order to provide proper synch detection even if one or more bits are wrong detected. Such reliability information is generated by a soft output decoding algorithm like MAP, log-MAP, max-log-MAP, SOVA etc., whereby MAP stands for maximum a-posteriori decoding and SOVA means soft-output Viterbi algorithm. All this algorithms are based on the BCJR algorithm, which e.g. has been disclosed by L.R. Bahl, J.Cocke, F.Jelinek, J.Raviv, "Optimal decoding of linear codes for minimizing symbol error rate", IEEE Trans. Information Theory, vol. IT-20, pp. 284-287, Mar. 1974. An overview about all said algorithms has been provided by Jason P. Woodard and Lajos Hanzo, in "Comparative Study of Turbo Decoding Techniques: An Overview", IEEE Transactions On Vehicular Technology, Vol. 49, No. 6, November 2000 and a PRML system using the soft-output Viterbi dectector to obtain reliability information from the PRML channel has been disclosed by J. Hagenauer and P. Hoeher, in "A Viterbi Algorithm with Soft-Decision Outputs and its Applications", Proc. of IEEE Globecom '89, Dallas, Texas, pp. 47.11.47.17, Nov. 1989. Therefore, e.g. a SISO PRML detector as shown in Fig. 1 provides for each bit an a-posteriori probability information as a reliability value. SISO means here soft-input soft-output. The soft-in soft-out partial response maximum likelihood detector SISO PRML provides a-posteriori probability information, which according to an embodiment of the invention for each bit is outputted as a log-likelihood ratio value LLR from channel data cd applied to the soft-in soft-out partial response maximum likelihood detector SISO PRML. Log-likelihood ratio values LLR are often coded with 6 bit representing a range from -32 to 31. The sign of the value indicates whether 0 or 1 has been detected and the absolute value represents the reliability of the decision. The higher absolute value indicates that the decision was the right one. Absolute values around zero indicate that the decision might be wrong. That means that in case of a wrong detection the absolute log-likelihood ratio value LLR of the bit is low.

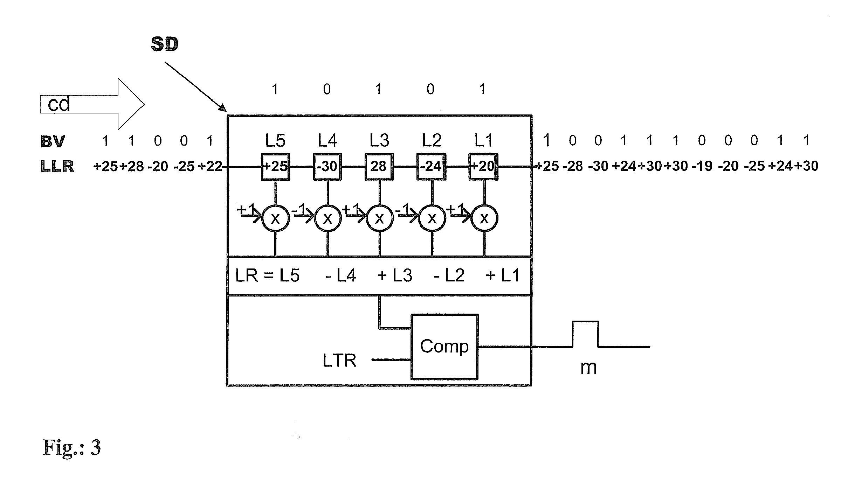

Bit values BV and corresponding log-likelihood ratio values LLR are illustrated in Fig. 3 to Fig. 5. Consequently, except the sign the log-likelihood ratio values LLR give no further hint whether a bit pattern is a synch pattern or not and a hard decision based on the signs would lead to the same negative result as an evaluation of the bit values BV if e.g. one bit has been wrong detected. Nevertheless, log-likelihood ratio values LLR are used for synch pattern detection according to the invention by a combination of said log-likelihood ratio values LLR with a conditional information of the synch pattern SP, which shall be detected, forming a synch pattern likelihood value LR and comparing said synch pattern likelihood value LR with an adaptive threshold LTR, which is determined by an observation of the occurrence of synch patterns SP in the received data. In more details, Fig. 3 illustrates in an exemplarily embodiment structure and operation of a soft decision synch pattern detector SD according to the invention in a simplified embodiment. Bit values BV only for reference purposes are shown in Fig. 3. Channel data cd represented by log-likelihood ratio values LLR are applied to the soft decision synch pattern detector SD, so that in a number of taps L1 to L5, which corresponds to the number of bits of the synch pattern SP, log-likelihood ratio values LLR for bits of a bit pattern are available, which are used for a synch pattern detection.

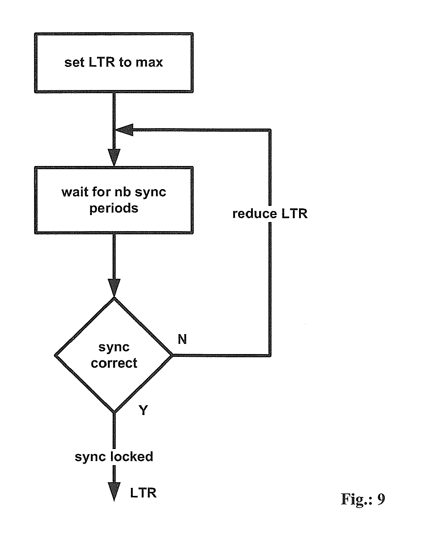

The status illustrated in Fig. 3 corresponds to a situation, wherein the bit pattern, which is currently analysed in the soft decision synch pattern detector SD by using related log-likelihood ratio values LLR, corresponds to a synch pattern SP of bit values BV 10101. A log-likelihood ratio value LLR of +20, which represents in this example the log-likelihood ratio value LLR of a first bit 1 of a bit pattern 10101 corresponding a synch pattern SP of bit values BV 10101. The first bit 1 entered at first tap L5 of the soft decision synch pattern detector SD and then has been shifted through taps L4 to L2 until it arrived in tap L1. The signs of the following log-likelihood ratio values LLR indicate that the data in taps L1 to L5 represent a synch pattern SP, which will be detected by soft decision synch pattern detector SD. Said detection is performed in the soft decision synch pattern detector SD in a first step by a multiplication of each of the log-likelihood ratio values LLR in taps L1 to L5 with a sign value corresponding to a conditional information of a corresponding bit of the synch pattern SP, which shall be detected. That means that in a case wherein the synch pattern SP is formed by five alternating bit values BV as 10101 as shown in Fig. 3, sign values related to the bit value BV at a bit location in the synch pattern SP are e.g. +1, -1, +1, -1 and +1, if for simplification the same weighting factor 1 for all bits is used. That means that in a first step log-likelihood ratio values LLR are multiplied with a sign value corresponding to the order and value of bits of the synch pattern SP, which shall be detected. Said multiplication takes also into account both the sign of log-likelihood ratio values LLR and the sign value selected according to a corresponding bit value of the bit of the synch pattern SP. The product values are added and the sum forms then a synch pattern likelihood value LR. However, said likelihood based on a combination of log-likelihood ratio values LLR with sign values corresponding to bit values BV of the expected synch pattern SP depends on the signal noise ratio, the length and the structure of the code sequence used in the digital data transmission system. Therefore, in a first glance it seems not to be possible to use synch pattern likelihood values LR for synch pattern detection. To be able to detect a synch pattern SP even if bits or corresponding log-likelihood ratio values LLR wrong have been detected, an adaptive threshold LTR is used. The distance in which synch pattern SP occur in the data stream is known, so that it is possible to reduce a maximum value of the adaptive threshold LTR until an expected number of synch pattern SP will be detected. The maximum value, which is possible for synch pattern likelihood values LR is determined by the range of log-likelihood ratio values LLR, which in this embodiment has been selected between -32 to 31 as mentioned above in connection with the 6 bit coding, and the bit values of the synch pattern SP, so that in a case of a non disturbed data transmission a maximum synch pattern likelihood value LR equal 157 would be possible in the exemplarily embodiment. That means that a maximum adaptive threshold LTR will be selected equal or better slightly below said value. The adaptive threshold LTR, which stepwise will be reduced starting from a maximum, can e.g. be generated by a state machine, which operates according to a flowchart shown in Fig. 9. That means that it starts with a maximum value set LTR to max by setting the value of the adaptive threshold LTR to a maximum and waiting for a predetermined number nb of synch periods wait for nb sync periods. If a corresponding number nb of synch pattern SP has not been detected N as expected during said waiting period, the value of the adaptive threshold LTR will be reduced by reduce LTR according to the diagram shown in Fig. 9. In case of yes Y the value of the adaptive threshold LTR may be kept or further reduced for a small number of steps to generate the adaptive threshold LTR, provided by a signal sync lock. The adaptive threshold LTR and synch pattern likelihood values LR are compared by a comparator comp shown in Fig. 3 and a matched signal m is provided at the output of the comparator comp if the investigated pattern of log-likelihood ratio values LLR in the synch detector SD represents a synch pattern SP.

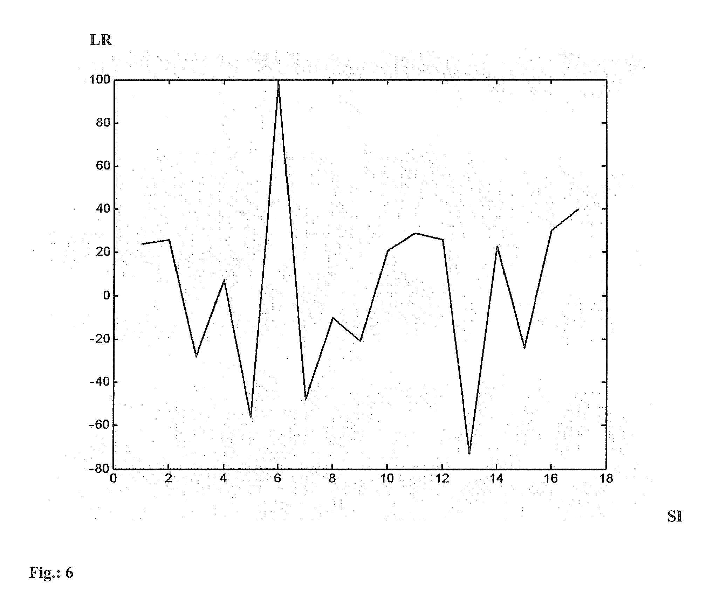

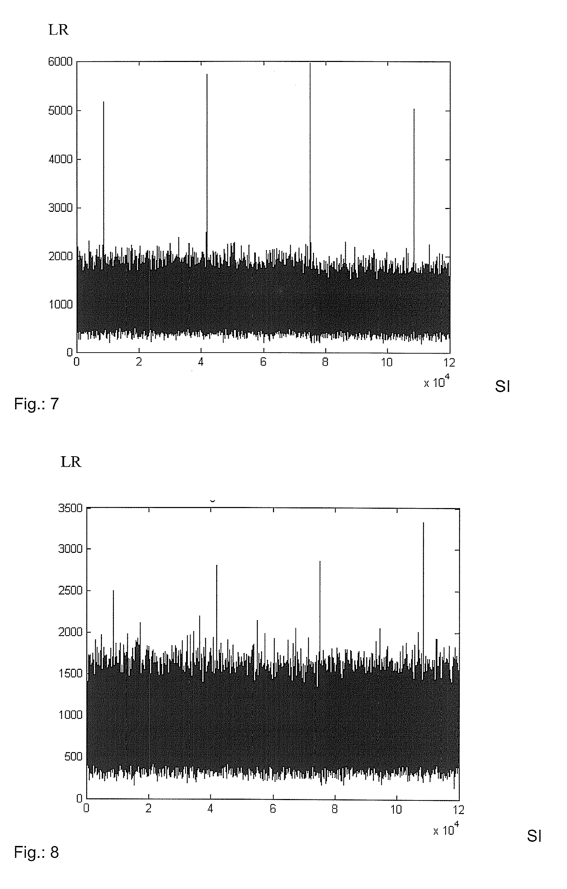

The method for generating a synch pattern likelihood value LR is furthermore illustrated in Figures 4 and 5 in tables, which show bit values BV, log-likelihood ratio values LLR related to said bit values BV and synch pattern likelihood values LR in a scenario of a matched sync pattern SP in Fig. 4. A scenario of a matched sync pattern SP even if not all bits or corresponding log-likelihood ratio values LLR are correctly detected is shown in Fig. 5. Fig. 5 illustrates furthermore that a bit pattern having the same bit values BV will and will not be detected as synch pattern SP. Log-likelihood ratio values LLR in taps L of a soft decision synch pattern detector SD are used for synch pattern detection. Each of the log-likelihood ratio values LLR, which e.g. are 25, -30, 28, -24 and 20 in the exemplarily embodiment and shown as bold number in Fig. 4, is multiplied with a sign value factor M, whereby the sign values correspond to order and value of the bits of the synch pattern SP, which shall be detected. That means that a log-likelihood ratio value LLR currently present in tap L5 is multiplied with +1, in tap L4 with -1, in tap L3 with +1, in tap L2 with -1 and in tap L1 with +1. The sum of the formed product values in said example is then a synch pattern likelihood value LR having the value 127 as shown in Fig. 4 as a bold number. Furthermore, values of synch pattern likelihood values LR of bit pattern, which already passed the soft decision synch pattern detector SD and have been determined by the same method are illustrated in Fig. 4. That means that for each bit pattern investigated in the soft decision synch pattern detector SD a synch pattern likelihood value LR is generated and compared with the adaptive threshold LTR as mentioned above. If we assume that there is a problem in reading the bit in the middle of the synch pattern SP there will be e.g. a bit pattern having a bit value BV equal 0 instead of 1 and a log-likelihood ratio value LLR equal -1 instead of + 28 as shown in a first bold part in Fig. 5. The calculation of the synch pattern likelihood value LR according to the method mentioned above results in that case in a value equal 98, as shown at a location corresponding to a chosen symbol index SI equal 6 in Fig. 5. That means that even if not all bits of the synchronisation pattern are correctly detected the synch pattern likelihood value LR generated according to the invention is much higher in comparison to synch pattern likelihood values LR generated for bit pattern different to a synch pattern SP. The second part in bold in Fig. 5 illustrates that a bit pattern having the same bit values BV does not represent a synch patter SP due to a much smaller synch pattern likelihood value LR, which in that case is 30 at a symbol index SI equal 16. This is a result of the different log-likelihood ratio values LLR especially for the bit in the middle of the bit pattern as the likelihood value of the wrong detected bit is smaller than the likelihood value for a correct detected bit value. Said behaviour of synch pattern likelihood values LR generated according to the invention is illustrated in Fig. 6, which shows in a diagram synch pattern likelihood values LR related to a symbol index SI as used in Fig. 5. The peak value illustrates the detect ability of a synch pattern SP. The results of the illustrated behaviour are confirmed by measurements illustrated in Fig. 7 and Fig. 8 for a synch pattern SP comprising 88 bit values BV or so-called symbols over a period of 120000 bit represented by symbol index SI.

The scale of the values of synch pattern likelihood values LR has been normalised to positive values in the diagrams by an offset and Fig. 7 illustrates the magnitude of synch pattern correlations at a signal noise ratio of 10 dB and Fig. 8 at a signal noise ratio of 0 dB. Fig. 7 illustrates that even in the case of a digital data transmission system having a very low signal noise ratio, wherein several wrong detected data can be expected, synch pattern are reliable detected according to the peak values of the generated synch pattern likelihood values LR. That means that the present invention improves synch pattern detection especially under low signal noise ratio conditions and even if not all bits of the synch pattern are correctly detected. The method provides a more reliable indication about the presence of a synch pattern in a bit stream representing a signal with low signal noise ratio in a digital data transmission system because the bits are weighted according to their reliability and probability in a sync pattern and the additional hardware complexity for improved synch pattern detection according to the invention is only minimal because soft decision values are already available in current channel decoding architectures. An exemplarily embodiment of using a soft decision synch detector SD according to the invention is shown in Fig. 1, wherein channel data cd e.g. read from an optical disc are applied to a soft-in soft-out partial response maximum likelihood detector SISO PRML, which provides at the output an a-posteriori probability for each received bit. The a-posteriori probability indicates the likelihood whether the received bit has a bit value BV of 0 or 1, which can be expressed as log-likelihood ratio value LLR of the bit. The log-likelihood ratio values LLR are applied to a soft decision soft decision synch pattern detector SD according to the invention, which like a hard decision synch pattern detector provides a matched signal m in case if a synch pattern has been detected or otherwise a not matched signal nm, however, with the difference that the soft decision synch pattern detector SD is able to detect a synch pattern SP even if e.g. due to a low signal noise ratio not all bits of the synch pattern SP are correctly detected. Output signals of the soft decision synch pattern detector SD can be used in conventional systems or in a soft decision system as shown in Fig. 1, wherein log-likelihood ratio values LLR provided by the soft-in soft-out partial response maximum likelihood detector SISO PRML are also applied to a soft-in soft-out run length limited decoder SISO RLL, which also receives a matched signal m from the soft decision synch pattern detector SD and a timing signal tm generated in a timing recovery unit TR, which also uses the output signal of the soft decision synch pattern detector SD. The output of the soft-in soft-out run length limited decoder SISO RLL is connected with an error correction unit ECC to form with further well known components an optical or magnetic disk drive system for reading recording media.

The invention can be applied to all digital data transmission systems wherein a synch pattern SP shall be detected and wherein soft decision values representing the likelihood of received bits can be generated.

Examples are optical or magnetic storage systems, wherein digital data have to be read from a recording medium or communication systems in which a transmission of digital data is used as e.g. mobile phones, cordless telephones or digital television systems.

It should be further understood by those skilled in the art that although the foregoing description has been made on simplified embodiments of the invention, the invention is not limited thereto and various changes and modifications may be made without departing from the spirit of the invention and the scope of the appended claims. Such changes or modifications are e.g. the use of weighting factors taking into account the influence of the transmission channel on likelihood values for bits of the synch patter, as it is a further aspect of the invention.

## Claims

1. A method for synch pattern detection in a digital data transmission system having a data channel with intrinsic information about symbol reliability wherein
- a soft decision synch pattern detector (SD) is used for detecting a synch pattern (SP) and a matched signal (m) is provided also if not all bits of the synch pattern (SP) or corresponding bit likelihood values are correctly detected.

2. Method according to claim 1, wherein a-posteriori probability values of channel data (cd) are used for detecting the synch pattern (SP).

3. Method according to claim 1, wherein log-likelihood ratio values (LLR) are used for detecting the synch pattern (SP).

4. Method according to claim 1, comprising the steps of
- generating a synch pattern likelihood value (LR) for a data sequence, which shall be checked whether or not it correlates with a synch pattern (SP) and
- comparing the synch pattern likelihood value (LR) with an adaptive threshold (LTR) to provide a matched signal (m) even if not all bits of the synch pattern (SP) or corresponding bit likelihood values are correctly detected.

5. Method according to claim 4, wherein the adaptive threshold (LTR) is generated by stepwise reducing (reduce LTR) a maximum value of the adaptive threshold (LTR) until an expected number (nb) of synch pattern (SP) during a predetermined period of time is detected or synch pattern (SP) in an expected distance are detected.

6. Method according to claim 4, wherein the synch pattern likelihood value (LR) is generated by a combination of a-posteriori probability values of channel data (cd) or log-likelihood ratio values (LLR) with a conditional information for each bit of an expected synch pattern (SP).

7. Method according to claim 4, wherein a-posteriori probability values of channel data (cd) or log-likelihood ratio values (LLR) are multiplied with corresponding conditional information values for bits of an expected synch pattern (SP) and the products thereof are added to form the synch pattern likelihood value (LR).

8. Method according to claim 6 or 7, wherein the conditional information is a sign value determined according to the bit value (BV) for each bit of the synch pattern (SP), which shall be detected.

9. Method according to claim 6 or 7, wherein the conditional information comprises a sign and a weighting factor determined according to the bit value (BV) and influences of the data transmission on the likelihood value for each bit of the synch pattern (SP), which shall be detected.

10. Arrangement for synch pattern detection in a digital data transmission system having a data channel with intrinsic information about symbol reliability wherein a soft decision synch pattern detector (SD) for detecting a synch pattern (SP) in channel data (cd) of the data channel comprises a number of taps (L1 to L5), which at least corresponds to a number of bits of a synch pattern (SP), which shall be detected, and wherein the taps (L1 to L5) are connected to a means for generating a synch pattern likelihood value (LR), which is applied to a first input of a comparator (comp), which compares the synch pattern likelihood value (LR) with an adaptive threshold (LTR) applied to a second input of the comparator (comp) and wherein the comparator (comp) provides a matched signal (m) indicating the detection of a synch pattern (SP) also if not all bits of the synch pattern (SP) or if not all corresponding bit likelihood values in the taps (L1 to L5) of the soft decision synch pattern detector (SD) correctly have been detected.

11. Arrangement according to claim 10, wherein the means for generating a synch pattern likelihood value (LR) is a multiplier, which is supplied by a sign value determined according to a bit value (BV) of a corresponding bit in the order of bits of the synch pattern (SP), which shall be detected, and wherein outputs of the multiplier are connected to an adder for providing the synch pattern likelihood value (LR).

12. Arrangement according to claim 10, wherein the adaptive threshold (LTR) is generated by a state machine, which stepwise reduces a maximum value of the adaptive threshold (LTR) until an expected number of synch pattern (SP) during a predetermined period of time is detected or synch pattern (SP) in an expected distance are detected.

13. Arrangement according to claim 10, wherein the soft decision synch pattern detector (SD) is connected to a soft-in soft-out partial response maximum likelihood detector (SISO PRML), which provides a-posteriori probability values of channel data (cd) or log-likelihood ratio values (LLR) applied to the taps (L1 to L5) of the soft decision synch pattern detector (SD).

14. Arrangement according to claim 10, wherein the digital data transmission system having a data channel with intrinsic information about symbol reliability is an optical or magnetic storage system in which data read from the recording medium are channel data (cd) of the digital data transmission system.

15. Arrangement according to claim 10, wherein the digital data transmission system having a data channel with intrinsic information about symbol reliability is a wireless communication system in which a data channel provides channel data (cd).

16. Arrangement according to claim 13, wherein log-likelihood ratio values (LLR) provided by the soft-in soft-out partial response maximum likelihood detector (SISO PRML) are also applied to a soft-in soft-out run length limited decoder (SISO RLL), which also receives a matched signal (m) from the soft decision synch pattern detector (SD) and a timing signal (tm) generated from the matched signal (m) in a timing recovery unit (TR) and wherein the output of the soft-in soft-out run length limited decoder (SISO RLL) is connected with an error correction unit (ECC) to form an optical or magnetic disk drive system for reading a recording medium.
